# EUROPEAN PATENT APPLICATION

(11) **EP 3 181 859 A1**
(43) Date of publication of application: **21.06.2017**
(21) Application number: 16200648.0
(22) Date of filing: 25.11.2016
(51) Int. Cl.: F02C 3/34, F02C 6/18, F02C 9/50, F02C 3/107

(54) **SYSTEM AND METHOD FOR CONTROLLING GAS TURBINE EXHAUST ENERGY VIA EXHAUST GAS DAMPER AND COMPRESSED GAS SUPPLY**

(30) Priority: 15.12.2015 US 201514969594
(71) Applicant: General Electric Company, Schenectady, NY 12345 (US)
(72) Inventor: CONCHIERI, John Anthony, Schenectady, NY 12345 (US)
(74) Representative: Lee, Brenda

(57) **Abstract**

A system and method for controlling gas turbine 12 exhaust energy for a gas turbine 12 power plant 10 is disclosed herein. The system includes a gas turbine 12 having a combustor 16 downstream from a compressor 14, a turbine 18 disposed downstream from the combustor 16 and an exhaust duct 44 downstream from an outlet of the turbine 18. An exhaust gas damper 64 is operably connected to a downstream end 66 of the exhaust duct 44 and a compressed gas supply 68 is in fluid communication with the exhaust duct 44 downstream from the turbine outlet and upstream from the exhaust gas damper 64. During operation of the gas turbine 12, the exhaust gas damper 64 and the compressed gas supply 68 increase backpressure at the turbine outlet and restrict axial exit velocity of the exhaust gas 42 exiting the turbine outlet.

## Description

### FIELD OF THE DISCLOSURE

The present disclosure generally relates to a gas turbine power plant such as a combined cycle or cogeneration power plant. More particularly, the present disclosure relates to a system and a method for controlling gas turbine exhaust energy via an exhaust gas damper and a compressed gas supply.

### BACKGROUND OF THE DISCLOSURE

A gas turbine power plant such as a combined cycle or cogeneration power plant generally includes a gas turbine having a compressor, a combustor, a turbine, a heat recovery steam generator (HRSG) that is downstream from the turbine and a steam turbine in operably connected to the HRSG. During operation, air enters the compressor via an inlet system and is progressively compressed as it is routed towards a compressor discharge casing prior to entering the combustor. A portion of the compressed gas is mixed with a fuel and burned within a combustion chamber defined within the combustor, thereby generating high temperature and high pressure combustion gas.

The combustion gas is routed along a hot gas path from the combustor through the turbine where they progressively expand as they flow across alternating stages of stationary vanes and rotatable turbine blades which are coupled to a rotor shaft. Kinetic energy is transferred from the combustion gas to the turbine blades thus causing the rotor shaft to rotate. The rotational energy of the rotor shaft may be converted to electrical energy via a generator. The combustion gas exits via an outlet of the turbine as exhaust gas and the exhaust gas is routed to the HRSG. Thermal energy from the exhaust gas may be transferred to water flowing through one or more heat exchangers of the HRSG, thereby producing superheated steam. The superheated steam may then be routed into the steam turbine to generate additional electricity and/or may be routed to support various secondary operations at the power plant or cogeneration site, thus enhancing overall power plant or cogeneration capability.

Output of the gas turbine may be restricted at certain ambient and load conditions in order to avoid mechanical/vibrational limitations of turbine rotor blades positioned at or proximate to the turbine outlet. This output restriction is related to the axial exit velocity of the exhaust gas as it exits the turbine outlet. Once a maximum axial exit velocity or Mach number is reached, the output of the gas turbine is reduced or derated by controls methodology in order to not exceed the allowable mechanical limits. As a result, generator/power output and/or thermal energy output for combined or cogeneration cycle operation is reduced.

### BRIEF DESCRIPTION

Aspects and advantages of the disclosure are set forth below in the following description, or may be obvious from the description, or may be learned through practice of the disclosure.

One embodiment of the present disclosure is directed to a power plant. The power plant includes a gas turbine having a combustor downstream from a compressor, a turbine disposed downstream from the combustor and an exhaust duct downstream from an outlet of the turbine where the exhaust duct receives exhaust gas from the turbine outlet. An exhaust gas damper is operably connected to a downstream end of the exhaust duct and a compressed gas supply in fluid communication with the exhaust duct is disposed downstream from the turbine outlet and upstream from the exhaust gas damper. The exhaust gas damper, when it is at least partially closed and the compressed gas supply when engaged increase backpressure at the turbine outlet and restrict axial exit velocity of the exhaust gas exiting the turbine outlet.

One embodiment of the present disclosure is directed to a method for controlling power plant output. The method includes selecting an operation mode for a gas turbine of a power plant via an input to a controller, restricting flow of an exhaust gas exiting an outlet of the turbine via an exhaust gas damper disposed downstream from the turbine outlet and injecting compressed gas into the exhaust duct via a compressed gas supply downstream from the turbine outlet and upstream from the exhaust gas damper where restricting the flow of the exhaust gas and injecting the compressed gas increases exhaust gas backpressure at the turbine outlet.

Those of ordinary skill in the art will better appreciate the features and aspects of such embodiments, and others, upon review of the specification.

### BRIEF DESCRIPTION OF THE DRAWINGS

A full and enabling disclosure is set forth more particularly in the remainder of the specification, including reference to the accompanying figures, in which:
FIG. 1 is a schematic diagram of an exemplary gas turbine based combined cycle/cogeneration power plant according to one embodiment of the present disclosure; and

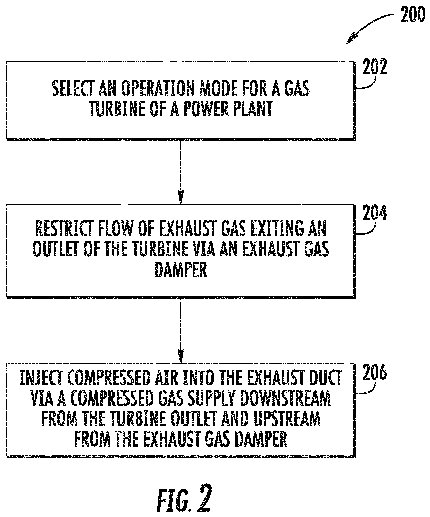

FIG. 2 is a flow diagram of a method for controlling power plant and/or gas turbine output.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts within the disclosure. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation of the disclosure, not limitation of the disclosure. In fact, it will be apparent to those skilled in the art that modifications and variations can be made in the present disclosure without departing from the scope or spirit thereof. For instance, features illustrated or described as part of one embodiment may be used on another embodiment to yield a still further embodiment. Thus, it is intended that the present disclosure covers such modifications and variations as come within the scope of the appended claims and their equivalents.

In a conventional co-generation power plant, fuel and air are supplied to a gas turbine. Air passes through an inlet of the gas turbine into the compressor section upstream of combustors in the gas turbine. After the air is heated by combustors, the heated air and other gases produced in the process (i.e., combustion gas) pass through the turbine section. The exhaust gas from the gas turbine passes from the turbine section to an exhaust section of the gas turbine, and flows to a heat recovery steam generator (HRSG) that extracts heat from the exhaust gas via one or more heat exchangers to produce steam.

In certain instances, it may be desirable to increase gas turbine generator output and/or exhaust gas thermal energy at levels which may exceed normal gas turbine operational limits which are related to mechanical/vibrational design limitations of the turbine rotor blades, particularly those positioned at or proximate to the turbine outlet. The present embodiments described herein provide a system and method for controlling gas turbine and/or power plant thermal and/or power output. By increasing the backpressure and/or turbine pressure ratio at the turbine outlet, the system and method reduces the axial exit velocity of the exhaust gases from the turbine outlet, thereby reducing and/or preventing turbine rotor blade flutter, particularly at the last stage of turbine rotor blades positioned at or proximate to the turbine outlet, thus allowing the gas turbine to operate above normal design limits and thus increasing overall gas turbine or power plant power and/or thermal output.

The ability to adjust turbine exhaust backpressure and exhaust energy adds operational flexibility so that more process steam can be generated at rated gas turbine operating conditions without the assistance of HRSG supplementary firing, thereby giving an operator an option to produce either more gas turbine power or more export process steam. As a secondary benefit, the gas turbine can operate at lower power output while maintaining emissions compliance because increasing exhaust pressure results with a less efficient gas turbine cycle while holding the combustion system at constant operating conditions.

The embodiments provided herein provide various technical advantages over existing gas turbine based simple cycle, cogeneration or combined cycle power plants. For example, the system and corresponding method provided herein may allow a smaller gas turbine to be applied to meet a customer specified process steam demand requirement when HRSG supplementary firing is not allowed. Even if HRSG supplementary firing is included, this system and method may reduce the amount of HRSG firing required which typically improves exhaust stack NOx emissions and perhaps overall combined heat and power cycle efficiency. This system may also improve operational flexibility between maximum available gas turbine power output and maximum available export process steam. This system and method can be integrated with and may enhance operation of gas turbines configured with exhaust gas re-circulation systems. The system and method may provide for additional electrical power generation during periods of peak electrical demands and/or may provide for additional exhaust energy generation for the HRSG so as to increase steam production during periods of peak demands for cogeneration operations.

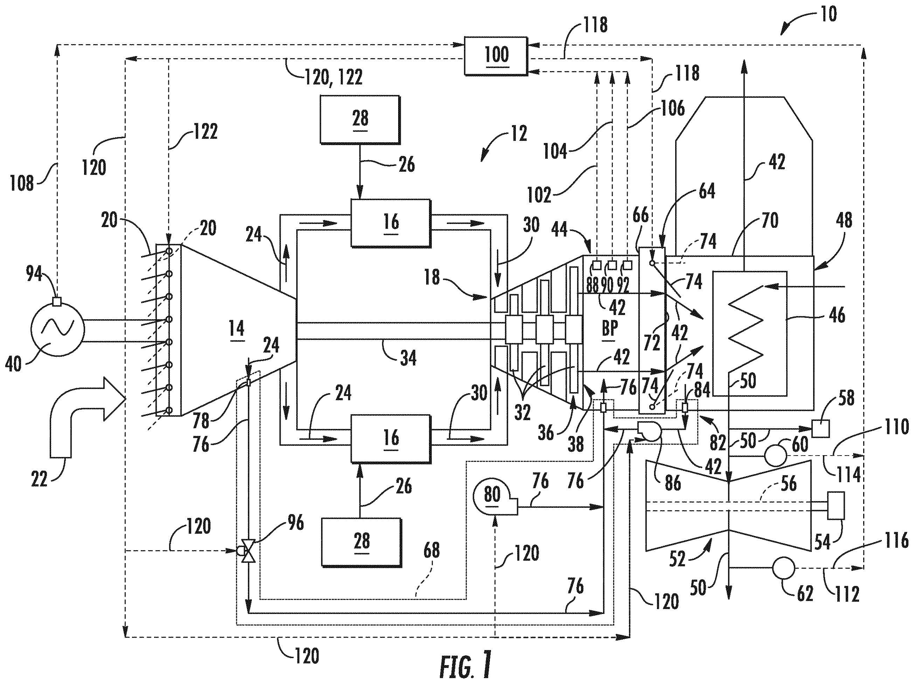

Referring now to the drawings, wherein identical numerals indicate the same elements throughout the figures, FIG. 1 provides a functional block or flow diagram of an exemplary gas turbine power plant 10 with steam production capability. The power plant 10 comprises a gas turbine 12 that may incorporate various embodiments of the present disclosure. The gas turbine 12 generally includes, in serial flow order, a compressor 14, a combustion section having one or more combustors 16 and a turbine 18. The gas turbine 12 may also include inlet guide vanes 20 disposed at an inlet or upstream end of the compressor 14. In operation, air 22 flows across the inlet guide vanes 20 and into the compressor 14. The compressor 14 imparts kinetic energy to the air 22 to produce compressed gas as indicated schematically by arrows 24. The inlet guide vanes 20 may be adjusted between a fully open position and a partially closed position to control the flow rate of the air 22 entering the compressor 14.

The compressed air 24 is mixed with a fuel 26 such as natural gas from a fuel supply system 28 to form a combustible mixture within the combustor(s) 16. The combustible mixture is burned to produce combustion gas as indicated schematically by arrows 30 having a high temperature, pressure and velocity. As the combustion gas 30 flows through the turbine 18 kinetic energy is transferred from the combustion gas 30 to various rows of turbine rotor blades 32 coupled to a rotor shaft 34, thus casing the rotor shaft 34 to rotate and produce work. The turbine rotor blades 32 are arranged in multiple axially spaced rows or stages along the rotor shaft 34. A last stage 36 of the turbine rotor blades 32 is positioned at or proximate to an outlet or downstream end 38 of the turbine 18.

The turbine 18 may have two or more stages, for example, a low pressure section and a high pressure section. In one embodiment, the turbine 18 may be a two-shaft turbine that includes a low pressure section and a high pressure section. In particular configurations, the turbine 18 may have 3 or more stages of turbine rotor blades 32. The rotor shaft 34 may be coupled to and drive the compressor 14 to produce the compressed air 24. Alternately or in addition, the rotor shaft 34 may connect the turbine 18 to a generator 40 for producing electricity. The combustion gas 30 loses thermal and kinetic energy as it flows through the turbine 18 and exits the outlet 38 of the turbine 18 as exhaust gas 42 via an exhaust duct or diffuser 44 that is operably coupled to the turbine outlet 38.

In particular embodiments, the exhaust duct 44 may be fluidly coupled to a heat exchanger or boiler 46 via various pipes, ducts, valves and the like. The heat exchanger 46 may be a standalone component or may be a component of a heat recovery steam generator (HRSG) 48. In various embodiments, the heat exchanger 46 may be used to extract thermal energy from the exhaust gas 42 to produce steam 50. In particular embodiments, the steam 50 may then be routed to a steam turbine 52 via various pipes, valves conduits or the like to produce additional power or electricity via a generator 54 coupled to a shaft 56 of the steam turbine 52.

In particular embodiments, at least a portion of the steam 50 may be piped from the heat exchanger 46 and/or the steam turbine 52 to an onsite or offsite facility 58 that distributes the steam 50 to users and/or utilizes the steam for secondary operations such as heat production or other industrial operations or processes. Steam temperature and/or steam flow rate or output from the heat exchanger 46 may be monitored via one or more sensors or flow monitors. For example, in one embodiment, one or more temperature sensors or flow monitors 60, 62 may be provided downstream from the heat exchanger 46 and/or downstream from the steam turbine 52, respectively.

In various embodiments the power plant 10 includes an exhaust gas damper or exhaust gas damper system 64 operably connected to the downstream end 38 of the turbine 18 and/or to a downstream end 66 of the exhaust duct 44 and positioned upstream from the heat exchanger 46 and/or HRSG 48. The power plant 10 further includes a compressed gas supply or compressed gas supply system 68 that is in fluid communication with the exhaust duct 44 upstream from the exhaust gas damper 64. In one embodiment, an inlet portion or duct 70 of the HRSG 48 is operably connected to a downstream end 72 of the exhaust gas damper 64 such that the inlet portion 70 receives the exhaust gas 42 from the exhaust gas damper 64.

The exhaust gas damper 64 may be any type of flow damper or flow restrictor suitable for its intended use. For example, in particular embodiments the exhaust gas damper 64 may be configured with a single blocker door which may be rotated 90 degrees between an open and closed position. In one embodiment, the exhaust gas damper 64 may comprise a circular arrangement of multiple blocker doors actuated simultaneously via a mechanical linkage. In one embodiment, the exhaust gas damper 64 may comprise dual blocker doors that pinch together during closure, thus providing a pseudo nozzle effect particularly where the exhaust duct 44 is square/rectangular shaped.

In one embodiment, the exhaust gas damper 64 may be a louvered damper having one or more louvers 74 that may be incrementally actuated via mechanical, electric, pneumatic or hydraulic or the like actuators between a fully open or at least partially closed position so as to increase or decrease the exhaust backpressure BP at or proximate to the turbine outlet 38, thereby controlling axial exit velocity of the exhaust gas 42 exiting the turbine outlet 38. In one embodiment, the exhaust gas damper 64 may be a guillotine damper. The guillotine damper may include one or more doors that may be incrementally actuated vertically via mechanical, electric, pneumatic or hydraulic actuators between a fully open or at least partially closed position so as to increase or decrease the backpressure BP at the turbine outlet 38, thereby controlling axial exit velocity of the exhaust gas 42 exiting the turbine outlet 38.

In various embodiments, the compressed gas supply 68 may be engaged or activated so as to inject a compressed or pressurized gas 76 such as air or exhaust gas into the exhaust duct 44 upstream from the exhaust gas damper 64, thus increasing the backpressure BP at the turbine outlet 38 and controlling or modifying axial exit velocity of the exhaust gas 42 exiting the turbine outlet 38. The compressed gas 76 may be or is injected at a pressure that is at least equal to or higher than the pressure inside the exhaust duct proximate to the turbine outlet 38. As a result, the power plant 10 may generate more electricity during high demand or peak demand periods and/or generate more thermal energy for steam production without compromising turbine rotor blade life when compared to a conventional operation of the gas turbine.

In particular embodiments, the compressed gas supply 68 may include the compressor 14 of the gas turbine 12. For example, in on embodiment, at least one compressor extraction port 78 as well as various fluid conduits and couplings may provide a flow path for extracting a portion of the compressed air 24 from the compressor 14 and for routing the compressed air 24 as compressed gas 76 into the exhaust duct 44 upstream from the exhaust gas damper 64, thereby increasing the backpressure BP at the turbine outlet 38. In particular embodiments the compressed gas supply 68 includes an auxiliary blower or fan 80. The auxiliary blower 80 may include an axial compressor. Various fluid conduits and/or couplings may provide a flow path for routing the compressed gas 76 from the auxiliary blower 80 into the exhaust duct 44 upstream from the exhaust gas damper 64, thereby increasing the backpressure BP at the turbine outlet 38. The compressed gas supply 68 may include an axial compressor or similar device for pressurizing the compressed gas 76 upstream form the exhaust duct 44.

In particular embodiments, the compressed gas supply 68 includes or is fluidly coupled to an exhaust recirculation system 82. An exhaust gas extraction port 84 disposed downstream from the exhaust gas damper and in fluid communication with various fluid conduits and/or couplings may provide a flow path for routing a portion of the exhaust gas 42 from a point downstream from the exhaust gas damper 64 back into the exhaust duct 44 at a location that is upstream from the exhaust gas damper 64, thereby further increasing the backpressure BP at the turbine outlet 38. In particular embodiments, the exhaust gas recirculation system 82 includes a blower or compressor 86 that increases the pressure of the exhaust gas 42 upstream from the injection point to a pressure that is equal to or greater than the pressure of the exhaust gas 42 within the exhaust duct 44.

In operation, the exhaust gas damper 64 in concert with the compressed gas supply 68 may be engaged to increase exhaust backpressure BP at the turbine outlet 38 upstream from the exhaust gas damper 64 by at least partially closing the exhaust gas damper 64, thereby restricting/reducing axial exit velocity of the exhaust gas 42 as the exhaust gas 42 exits the turbine outlet 38 and by increasing the volume of gas/air within the exhaust duct 44. This increase in exhaust backpressure BP at or proximate to the turbine outlet 38 allows for an increase in gas turbine or power plant output capacity, since the gas turbine is not derated to avoid turbine axial exit velocity limits. For example, by at least partially closing the exhaust gas damper 64 and increasing the exhaust backpressure BP via the compressed gas supply 68, thereby decreasing the axial exit velocity, an operator may increase gas turbine and/or power plant power and/or thermal energy output without exceeding mechanical or vibrational design limitations of the turbine rotor blades 32, particularly the turbine rotor blades 32 of the last turbine stage 36. As a result, the power plant 10 may generate more electricity during high demand or peak demand periods and/or generate more thermal energy for steam production without compromising turbine rotor blade life when compared to a conventional operation of the gas turbine.

In various embodiments, the power plant 10 includes a controller 100 electronically coupled to the exhaust gas damper 64. The controller 100 may be a microprocessor based processor that includes a non-transitory memory and that has the capability to calculate algorithms. For example, the controller 100 may incorporate a General Electric SPEEDTRONIC™ Gas Turbine Control System, such as but not limited to a SPEEDTRONIC™ Mark VI or Mark VIe Gas Turbine Control System manufactured by or for GE Power & Water Systems of Schenectady, N.Y. The controller 100 may also incorporate a computer system having a processor(s) that executes programs stored in a memory to control the operation of the gas turbine using sensor inputs and instructions from human operators.

In particular embodiments, the controller 100 is programmed to actuate the exhaust gas damper 64 and/or the engage the compressed gas supply 68 to control the exhaust backpressure BP at or proximate to the turbine outlet 38 of the turbine 18, such as in the exhaust duct 44 upstream from the exhaust gas damper 64. The controller 100 may also be programmed to actuate the inlet guide vanes 20, thereby increasing or decreasing the volume of air 22 entering the compressor 14.

The controller 100 may be programmed with an axial exit velocity limit or value which corresponds to a predefined axial flow velocity limit of the exhaust gas 42 flowing from the turbine outlet 38. The axial exit velocity limit may be stored in the memory of the controller 100 or may be inputted into the controller in real-time by an operator. The axial exit velocity limit may be based at least in part on particular design limitations of various hardware components of the turbine 18 such as but not limited to vibrational/mechanical design limitations of the turbine rotor blades 32, particularly the turbine rotor blades 32 of the last row 36.

In operation, the controller 100 may receive one or more input data signals corresponding to one or more of exhaust backpressure 102 from a pressure sensor 88 disposed at or proximate to the turbine outlet 38 and/or within the exhaust duct 44, and/or axial exit velocity 104 from a flow velocity sensor 90 disposed at or proximate to the turbine outlet 38 and/or within the exhaust duct 44. The controller 100 may receive one or more data input signals corresponding to exhaust gas temperature 106 from a temperature sensor 92 disposed at or proximate to the turbine outlet 38 and/or within the exhaust duct 44. The controller 100 may receive one or more data input signals corresponding to power output 108 from a power sensor 94 coupled to the gas turbine generator 40. The controller 100 may receive one or more data input signals corresponding to steam flow rate 110, 112 and/or steam temperature 114, 116 via either or both sensors 60, 62.

In particular embodiments, based at least in part on one or more of signals 102, 104, 106, 108, 110, 114 and/or 116, the controller 100 may regulate the gas turbine output and/or power plant output (i.e. power output and/or thermal output) by generating and/or sensing an appropriate control signal 118 causing the exhaust gas damper 64 to incrementally move between a fully open position and an at least partially closed position and one or more control signal(s) 120 so as to engage or activate the compressed gas supply 68 so as to inject the compressed gas 76 into the exhaust duct 44 upstream from the exhaust gas damper 64, thereby controlling the exhaust gas back pressure BP at the turbine outlet 38, thus increasing the power and/or thermal output of the gas turbine 12 and/or the power plant 10 by controlling axial exit velocity of the exhaust gas 42 at or proximate to the turbine outlet 38.

In particular embodiments, the controller 100 generates and/or sends control signal 118 which causes the exhaust gas damper 64 to at least partially open or at least partially close and generates and/or sends control signal 120 which causes the compressed gas supply 68 to inject compressed gas 76 into the exhaust duct 44 based on the exhaust gas backpressure data signal 102 provided by the pressure sensor 88. In particular embodiments, the controller 100 generates and/or sends control signal 118 which causes the exhaust gas damper 64 to at least partially open or at least partially close and generates and/or sends control signal 120 which causes the compressed gas supply 68 to inject compressed gas 76 into the exhaust duct 44 based on the axial exit velocity data signal 104 provided by the flow velocity sensor 90.

In particular embodiments, the controller 100 generates and/or sends control signal 118 which causes the exhaust gas damper 64 to at least partially open or at least partially close and generates and/or sends control signal 120 which causes the compressed gas supply 68 to inject compressed gas 76 into the exhaust duct 44 based at least in part on the exhaust gas temperature data signal 106 provided by the temperature sensor 92. In particular embodiments, the controller 100 generates and/or sends control signal 118 which causes the exhaust gas damper 64 to at least partially open or at least partially close and generates and/or sends control signal 120 which causes the compressed gas supply 68 to inject compressed gas 76 into the exhaust duct 44 based at least in part upon the power output signal 108 generated by the power monitor or sensor 94. In particular embodiments, the controller 100 generates and/or sends control signal 118 which causes the exhaust gas damper 64 to at least partially open or at least partially close and generates and/or sends control signal 120 which causes the compressed gas supply 68 to inject compressed gas 76 into the exhaust duct 44 based at least in part upon a steam flow rate signal 110, 112 and/or a steam temperature signal 114, 116 generated by steam flow/steam temperatures sensors 60, 62.

In particular embodiments, the controller 100 may generate and/or send control signal 122 to the inlet guide vanes 20 causing the inlet guides vanes 22 to actuate or bias towards a fully open position, thereby increasing air flow volume into the compressor 14 and increasing thermal output of the gas turbine 10. In particular embodiments, the controller 100 may generate and/or send control signal 122 to the inlet guide vanes 20 causing the inlet guides vanes 22 to actuate or bias towards a partially closed position, thereby decreasing air flow volume into the compressor 14 and decreasing thermal output of the gas turbine 10. Control signal 122 cause the guide vanes 20 to bias between open or closed positions based one or more of signals 102, 104, 106, 108, 110, 112, 114, 116.

The various embodiments described herein provide a method 200 for controlling gas turbine and/or power plant output. In one embodiment at step 202, method 200 includes selecting an operation mode for a gas turbine of the power plant, for example, via an input to the controller 100. The operation mode may correspond to an operation mode which optimizes power plant or gas turbine output over power plant heat rate. The operation mode may correspond to an operational mode whereby increased or maximum power output and/other thermal output for steam production is desired such as during peak power demand. At step 204, method 200 includes restricting flow of the exhaust gas 42 exiting the outlet 38 of the turbine 18 via the exhaust gas damper 64. At step 206, method 200 includes injecting the compressed gas 76 into the exhaust duct 44 via the compressed gas supply 68 at a location that is downstream from the turbine outlet 38 and upstream from the exhaust gas damper 64 such that restricting the flow of the exhaust gas 42 and injecting the compressed gas 76 increases exhaust gas backpressure BP at the turbine outlet, thereby increasing power output and/or thermal output of the gas turbine 12 and/or the power plant 10.

Method 200 may also include fully opening the inlet guide vanes 22, thereby increasing air flow into the compressor and increasing gas turbine power output. Method 200 may also include monitoring the axial exit velocity of the exhaust gas 42 upstream from the exhaust gas damper 64 via sensor 88 and controlling the flow rate of the compressed gas 76 via the controller 100 and one or more flow control valves 94 and/or the blower 86 of the compressed gas supply 68 electronically coupled to the controller 100 based on the axial exit velocity signal 104.

Although specific embodiments have been illustrated and described herein, it should be appreciated that any arrangement, which is calculated to achieve the same purpose, may be substituted for the specific embodiments shown and that the disclosure has other applications in other environments. This application is intended to cover any adaptations or variations of the present disclosure. The following claims are in no way intended to limit the scope of the disclosure to the specific embodiments described herein.

Various aspects and embodiments of the present invention are defined by the following numbered clauses:
1. A power plant, comprising:
   a gas turbine including a combustor downstream from a compressor, a turbine disposed downstream from the combustor and an exhaust duct downstream from an outlet of the turbine, wherein the exhaust duct receives exhaust gas from the turbine outlet;
   an exhaust gas damper operably connected to a downstream end of the exhaust duct; and
   a compressed gas supply in fluid communication with the exhaust duct downstream from the turbine outlet and upstream from the exhaust gas damper, wherein the exhaust gas damper and the compressed gas supply increase backpressure at the turbine outlet and restrict axial exit velocity of the exhaust gas exiting the turbine outlet.
2. The power plant as in clause 1, wherein the exhaust gas damper is a guillotine damper.
3. The power plant as in any preceding clause, wherein the exhaust gas damper is a louver damper.
4. The power plant as in any preceding clause, wherein the compressed gas supply includes the compressor of the gas turbine.
5. The power plant as in any preceding clause, wherein the compressed gas supply includes an auxiliary blower or fan.
6. The power plant as in any preceding clause, wherein the compressed gas supply includes an exhaust gas recirculation system.
7. The power plant as in any preceding clause, wherein the exhaust gas recirculation system is in fluid communication with an exhaust gas extraction port disposed downstream from the exhaust gas damper.
8. The power plant as in any preceding clause, further comprising a heat recovery steam generator having an inlet portion operably connected to a downstream end of the exhaust gas damper, wherein the inlet portion receives the exhaust gas from the exhaust gas damper.
9. The power plant as in any preceding clause, further comprising a controller electronically coupled to the exhaust gas damper and to the compressed gas supply, wherein the controller generates a first signal which causes the exhaust gas damper to at least partially open or at least partially close and a second signal which causes the compressed gas supply to inject compressed gas into the exhaust duct based on an exhaust gas backpressure data signal provided by pressure sensor electronically connected to the controller and disposed upstream from the exhaust gas damper and proximate to the turbine outlet.
10. The power plant as in any preceding clause, further comprising a controller electronically coupled to the exhaust gas damper and to the compressed gas supply, wherein the controller generates a first signal which causes the exhaust gas damper to at least partially open or at least partially close and a second signal which causes the compressed gas supply to inject compressed gas into the exhaust duct based on an axial exit velocity data signal provided by a flow velocity sensor electronically connected to the controller and disposed upstream from the damper proximate to the turbine outlet.
11. The power plant as in any preceding clause, further comprising a controller electronically coupled to the exhaust gas damper and to the compressed gas supply, wherein the controller generates a first signal which causes the exhaust gas damper to at least partially open or at least partially close and a second signal which causes the compressed gas supply to inject compressed gas into the exhaust duct based at least in part on an exhaust gas temperature data signal provided by a temperature sensor electronically connected to the controller and disposed upstream from the damper proximate to the turbine outlet.
12. The power plant as in any preceding clause, further comprising a controller electronically coupled to the exhaust gas damper and to the compressed gas supply, wherein the controller generates a first signal which causes the exhaust gas damper to at least partially open or at least partially close and a second signal which causes the compressed gas supply to inject compressed gas into the exhaust duct based at least in part upon a power output signal generated by a power monitor electronically connected to the controller and to a power generator coupled to the steam turbine.
13. The power plant as in any preceding clause, further comprising a steam turbine disposed downstream from the exhaust gas damper.
14. The power plant as in any preceding clause, further comprising a controller electronically coupled to the exhaust gas damper and to the compressed gas supply, wherein the controller generates a first signal which causes the exhaust gas damper to at least partially open or at least partially close and a second signal which causes the compressed gas supply to inject compressed gas into the exhaust duct based at least in part upon a steam flow rate signal generated by a steam flow sensor positioned downstream from the steam turbine and electronically connected to the controller.
15. A method for controlling power plant output, comprising:
   selecting an operation mode for a gas turbine of a power plant;
   restricting flow of exhaust gas exiting an outlet of the turbine via an exhaust gas damper disposed downstream from the turbine outlet; and
   injecting compressed gas into the exhaust duct via a compressed gas supply downstream from the turbine outlet and upstream from the exhaust gas damper;
   wherein restricting flow of exhaust gas and injecting compressed gas increases exhaust gas backpressure and exhaust gas energy at the turbine outlet.
16. The method as in any preceding clause, further comprising fully opening inlet guide vanes disposed at an inlet of a compressor of the gas turbine.
17. The method as in any preceding clause, further comprising monitoring axial exit velocity of the exhaust gas upstream via a sensor disposed within the exhaust gas damper and controlling flow rate of the compressed gas via a controller electronically coupled to one or more control valves based on the axial exit velocity.
18. The method as in any preceding clause, wherein the compressed gas supply comprises at least one of a compressor of the gas turbine, an auxiliary blower or fan.
19. The method as in any preceding clause, wherein the compressed gas supply comprises an exhaust gas recirculation system.

## Claims

1. A power plant (10), comprising:
a gas turbine (12) including a combustor (16) downstream from a compressor (14), a turbine (18) disposed downstream from the combustor (16) and an exhaust duct (44) downstream from an outlet of the turbine (18), wherein the exhaust duct (44) receives exhaust gas (42) from the turbine outlet;
an exhaust gas damper (64) operably connected to a downstream end (66) of the exhaust duct (44); and
a compressed gas supply (68) in fluid communication with the exhaust duct (44) downstream from the turbine outlet and upstream from the exhaust gas damper (64), wherein the exhaust gas damper (64) and the compressed gas supply (68) increase backpressure at the turbine outlet and restrict axial exit velocity of the exhaust gas (42) exiting the turbine outlet.

2. The power plant (10) as in claim 1, wherein the exhaust gas damper (64) is a guillotine damper (64).

3. The power plant (10) as in claim 1, wherein the exhaust gas damper (64) is a louver damper (64).

4. The power plant (10) as in claim 1, 2 or 3, wherein the compressed gas supply (68) comprises the compressor (14) of the gas turbine (12).

5. The power plant (10) as in claim 1, 2 or 3, wherein the compressed gas supply (68) comprises an auxiliary blower (86).

6. The power plant (10) as in any preceding claim, wherein the compressed gas supply (68) includes an exhaust gas recirculation system (82).

7. The power plant (10) as in claim 6, wherein the exhaust gas recirculation system (82) is in fluid communication with an exhaust gas extraction port (78) disposed downstream from the exhaust gas damper (64).

8. The power plant (10) as in any preceding claim, further comprising a heat recovery steam generator (48) having an inlet portion (70) operably connected to a downstream end (72) of the exhaust gas damper (64), wherein the inlet portion (70) receives the exhaust gas (42) from the exhaust gas damper (64).

9. The power plant (10) as in any preceding claim, further comprising a controller (100) electronically coupled to the exhaust gas damper (64) and to the compressed gas supply (68), wherein the controller (100) generates a first signal which causes the exhaust gas damper (64) to at least partially open or at least partially close and a second signal which causes the compressed gas supply (68) to inject compressed gas (76) into the exhaust duct (44) based on an exhaust gas (42) backpressure data signal provided by pressure sensor electronically connected to the controller (100) and disposed upstream from the exhaust gas damper (64) and proximate to the turbine outlet.

10. The power plant (10) as in any of claims 1 to 8, further comprising a controller (100) electronically coupled to the exhaust gas damper (64) and to the compressed gas supply (68), wherein the controller (100) generates a first signal which causes the exhaust gas damper (64) to at least partially open or at least partially close and a second signal which causes the compressed gas supply (68) to inject compressed gas (76) into the exhaust duct (44) based on an axial exit velocity data signal provided by a flow velocity sensor electronically connected to the controller (100) and disposed upstream from the damper (64) proximate to the turbine outlet.

11. The power plant (10) as in any of claims 1 to 8, further comprising a controller (100) electronically coupled to the exhaust gas damper (64) and to the compressed gas supply (68), wherein the controller (100) generates a first signal which causes the exhaust gas damper (64) to at least partially open or at least partially close and a second signal which causes the compressed gas supply (68) to inject compressed gas (76) into the exhaust duct (44) based at least in part on an exhaust gas (42) temperature data signal provided by a temperature sensor electronically connected to the controller (100) and disposed upstream from the damper (64) proximate to the turbine outlet.

12. The power plant (10) as in any of claims 1 to 8, further comprising a controller (100) electronically coupled to the exhaust gas damper (64) and to the compressed gas supply (68), wherein the controller (100) generates a first signal which causes the exhaust gas damper (64) to at least partially open or at least partially close and a second signal which causes the compressed gas supply (68) to inject compressed gas (76) into the exhaust duct (44) based at least in part upon a power output signal generated by a power monitor electronically connected to the controller (100) and to a power generator coupled to the steam turbine (18).

13. The power plant (10) as in any preceding claim, further comprising a steam turbine (18) disposed downstream from the exhaust gas damper (64).

14. The power plant (10) as in claim 13, further comprising a controller (100) electronically coupled to the exhaust gas damper (64) and to the compressed gas supply (68), wherein the controller (100) generates a first signal which causes the exhaust gas damper (64) to at least partially open or at least partially close and a second signal which causes the compressed gas supply (68) to inject compressed gas (76) into the exhaust duct (44) based at least in part upon a steam flow rate signal generated by a steam flow sensor positioned downstream from the steam turbine (18) and electronically connected to the controller (100).

15. A method for controlling power plant output, comprising:
selecting an operation mode for a gas turbine of a power plant;
restricting flow of exhaust gas exiting an outlet of the turbine via an exhaust gas damper disposed downstream from the turbine outlet; and
injecting compressed gas into the exhaust duct via a compressed gas supply downstream from the turbine outlet and upstream from the exhaust gas damper;
wherein restricting flow of exhaust gas and injecting compressed gas increases exhaust gas backpressure and exhaust gas energy at the turbine outlet.
